(19)

Europäisches Patentamt

European Patent Office

Office européen des brevets

(11)  **EP 4 368 970 A1**

(12)  **EUROPEAN PATENT APPLICATION**

(43) Date of publication:
 **15.05.2024  Bulletin 2024/20**

(21) Application number: **22206257.2**

(22) Date of filing: **08.11.2022**

(51) International Patent Classification (IPC):
 ***G01N 21/63*** (2006.01)     ***G01N 21/64*** (2006.01)
 ***G01N 21/84*** (2006.01)

(52) Cooperative Patent Classification (CPC):
 **G01N 21/6486;** G01N 2021/635; G01N 2021/8466

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(71) Applicant: **Gardin Ltd
 Abingdon, Oxfordshire OX14 4RY (GB)**

(72) Inventors:
 • **Godding, Julian
  Bisley (GB)**
 • **Ticchiarelli, Fabrizio
  Winchester (GB)**

(74) Representative: **Gill Jennings & Every LLP
 The Broadgate Tower
 20 Primrose Street
 London EC2A 2ES (GB)**

(54)  **METHOD OF MEASURING CHLOROPHYLL FLUORESCENCE**

(57)     A method of measuring chlorophyll fluorescence is provided. The method comprises performing a first chlorophyll fluorescence measurement at one or more different areas of a crop. Performing each first chlorophyll fluorescence measurement comprises: using an actuator configured to controllably direct the light from a light source, aiming said light source at an area of the crop; using the light source to emit substantially collimated or convergently focussed light so as to irradiate the area with light; using an optical sensor, detecting chlorophyll fluorescence from the area; and using a controller, recording the location of the area. The method then comprises performing a second chlorophyll fluorescence measurement at the one or more different areas. Performing each second chlorophyll fluorescence measurement comprises: using the actuator, aiming said light source at one of said areas based on the recorded location of the area in the respective first chlorophyll fluorescence measurement; using the light source to emit substantially collimated or convergently focussed light so as to irradiate the area with light; and using the optical sensor, detecting chlorophyll fluorescence from the area.

FIG. 1

EP 4 368 970 A1

## Description

## FIELD OF THE INVENTION

The invention relates to a technique for measuring chlorophyll fluorescence of a crop, suitable for use in commercial greenhouses, vertical farms, or outdoor farms, and particularly for coordinating measurements made at different times.

## BACKGROUND

In plant growth, chlorophyll fluorescence is the phenomenon by which absorbed light is re-emitted by chlorophyll molecules in the plant during de-excitation. Light absorbed by a plant can generally contribute to electron transport, heat, or fluorescence, and the ratio of these can vary based on environmental factors and factors associated with the plant physiology. Measuring chlorophyll fluorescence can be used as an indicator physiology. Measuring chlorophyll fluorescence can be used as an indicator for several aspects of plant growth, including rates of $CO_2$ assimilation by the plant via photosynthesis (electron transport through the photosystem), perception of biotic or abiotic stress, and the impact environmental changes (e.g. temperature, humidity, irrigation, carbon dioxide concentration) are having on the growth efficiency of the plant. As such, chlorophyll fluorescence is a useful technique for evaluating the yield, nutrition, and quality of agricultural crops.

Chlorophyll fluorescence is usually assessed by firstly exposing a dark-adapted plant to a short high intensity flash of light in order to saturate the photochemical processes in the plant, which allows the fluorescence levels to reach their maximum. The fluorescence then returns to its minimum levels in the dark adapted state. Subsequently, an actinic light is applied, and saturation pulses applied again. Fluorescence rises to a new light-adapted maximum in response to the pulses, before falling to a light-adapted minimum. The ratio of these fluorescence levels provides various indications of the state of the plant, including its efficiency, i.e. the proportion of incident light that is contributing to useful electron transport.

A description of the theory behind chlorophyll fluorescence analysis can be found in "Chlorophyll fluorescence analysis: a guide to good practice and understanding some new applications.", by E. Murchie and T. Lawson, Journal of experimental botany, 64 13 (2013): 3983-98, DOI:10.1093/jxb/ert208.

There are a number of different chlorophyll fluorescence measurements that are important as indicators of plant physiology. A first measurement is $F_0$, which is a measure of the minimal fluorescence of a plant in a dark-adapted state, when all of the PSII reaction centres are said to be open. A second measurement is $F_m$, which is a measure of the maximal fluorescence of a plant in a dark-adapted state when exposed to a high intensity pulse which closes all of the PSII reaction centres. From these two values, an important relationship is the variable fluorescence of the dark-adapted crop $F_v$, calculated as:

$$F_v = F_m - F_0$$

Once the plant is exposed to actinic light or otherwise placed in a light-adapted state, the fluorescence will spike before being quenched by photochemical and non-photochemical processes as it adapts to the light and emits a baseline fluorescence of F'. Following this spike and subsequent quenching, another important measurement is $F_m'$, which is a measure of the maximal fluorescence of a plant in this light-adapted state, which is measured by exposing a light-adapted plant to a high intensity pulse. From this, a value $F_q'$ is obtained as:

$$F_q' = F_m' - F'$$

Then, there is $F_0'$, which is a measure of the minimal fluorescence of a plant in a light-adapted state. This is generally obtained by switching off actinic light and observing the decay in fluorescence to the minimal value $F_0'$, From these, the variable fluorescence of the dark-adapted crop $F_v'$ is calculated as:

$$F_v' = F_m' - F_0'$$

$F_0'$ is generally difficult to directly measure where the plant is adapted to day-light, which cannot be switched off. However, $F_0'$ is important, as it is used in the ratios $F_q'/F_v'$, also known as qP, which is an estimate of photochemical quenching, and $F_v'/F_m'$, which is an estimate of the maximum efficiency in the light.

The Oxborough and Baker equation allows $F_0'$ to be calculated from other measurement values more readily obtainable:

$$F_0' = F_0 / [\frac{F_v}{F_m} + \frac{F_0}{F_m'}]$$

There have been various techniques for taking these dark-adapted and light-adapted measurements of a crop in practical scenarios. One technique uses a contact method, involving a device that is clipped to a leaf and which takes a measurement of the same spot in different conditions. This device may emit far red radiation, which effectively places the plant in a dark-adapted state, so that it can take a reading of both dark-adapted and light-adapted values, but has the drawback that it requires contact with the plant and must be manually moved around the crop to take multiple readings. Other techniques involve taking a crop specimen and placing the specimen in a dedicated testing device while taking both dark-adapted and light-adapted measurements. This technique again requires manual intervention and also disturbs the plant taken as a specimen. It is an object of this invention to provide an improved technique for making these chlorophyll fluorescence measurements.

## SUMMARY OF INVENTION

In accordance with a first aspect of the invention, there is provided a method of measuring chlorophyll fluorescence, the method comprising: performing a first chlorophyll fluorescence measurement at one or more different areas of a crop, wherein performing each first chlorophyll fluorescence measurement comprises: using an actuator configured to controllably direct the light from a light source, aiming said light source at an area of the crop; using the light source to emit substantially collimated or convergently focussed light so as to irradiate the area with light; using an optical sensor, detecting chlorophyll fluorescence from the area; and using a controller, recording the location of the area; and then performing a second chlorophyll fluorescence measurement at the one or more different areas, wherein performing each second chlorophyll fluorescence measurement comprises: using the actuator, aiming said light source at one of said areas based on the recorded location of the area in the respective first chlorophyll fluorescence measurement; using the light source to emit substantially collimated or convergently focussed light so as to irradiate the area with light; and using the optical sensor, detecting chlorophyll fluorescence from the area.

The present method uses a scanning chlorophyll fluorescence measuring device, which is capable of taking chlorophyll fluorescence measurements of a crop at various different locations from a distance. The technique includes two distinct phases: a first, in which measurements are made over a first time period; and a second, in which measurements are made in the same locations of the crop over a second time period after the first time period. Preferably, one or more of the first measurements are taken at least one hour apart, preferably at least two hours apart, more preferably at least four hours apart, from the corresponding one or more second measurements. The term "corresponding" here designates measurements that are taken of the same area of the crop. The technique is able to correlate the measurements made at these different times by recording the location of each measurement taken in the first phase and then returning to those locations to make measurements again in the second phase. This is important because these measurement values are not unitless and are therefore impacted by distance, meaning that the scanning system must be taking chlorophyll fluorescence measurements from the same distance to each part of the crop in the two different phases in order to accurately understand any differences arising from the plant physiology. Furthermore, measuring the same area of the crop on successive measurements ensures that any differences in measurement can be attributed to changes in plant physiology, rather than local differences that might exist at different areas of the crop.

The term "crop" here is intended to refer to any one or more plants to be measured. Typically, the crop will include a plurality of plants being grown in a commercial setting, such as a greenhouse, vertical farm, or outdoor farm.

The present technique also uses an actuator to aim the light source. It will be appreciated that this may be achieved by physically moving the light source, e.g. translating or rotating a laser emitter, so as to direct the light from the light source to irradiate different areas. Alternatively, or additionally, the actuator may be configured to move one or more optical elements, such as mirrors or lenses, relative to the light source so as to direct the light from the light source. The use of, for example, a scanning mirror or a light-steering microelectromechanical system may allow the light from the light source to be directed between different areas without movement of the light source.

The light source itself emits substantially collimated or convergently focussed light in order to irradiate small areas of a canopy of a plant crop. The system will typically be mounted over a crop and will irradiate down onto the canopy in small areas corresponding to measurement target position. It will be appreciated that the system does not require precise collimation of the light source, and indeed commercially available lasers have some degree of beam divergence. The term "substantially collimated" will be understood to encompass a light source with a beam divergence of 10° or less. More tightly collimated light will, of course, be preferred, and indeed, it will be preferred to have a beam divergence of 5° or less, more preferably 2° or less, even more preferably 1° or less, most preferably 0.1° or less. Commercially available lasers will typically have a beam divergence of much less than 0.1°, but as will be explained further below, the present system can be implemented with light sources that have much more loosely collimated light.

The present technique is particularly useful when each first chlorophyll measurement is performed while the crop is in a dark-adapted state, and each second chlorophyll measurement is performed while the crop is in a light-adapted state. This conveniently allows both dark-adapted and light-adapted measurements to be taken in an array of locations of a crop remotely, without manual intervention. Furthermore, the technique integrates well into practical scenarios, since the first measurements may be taken, for example, at night when the crop will be in a naturally dark-adapted state, and the second measurements taken some time later, for example during the day, when the crop has adapted to exposure to daylight and/or grow lights. The term "dark-adapted" is intended to refer to a plant that has undergone relaxation of light reactions. This may mean that the plant has been exposed to substantially no actinic light for a predetermined amount of time, e.g. 30 minutes. While 30 minutes is given as an example here, perfect dark adaption and relaxation of light reactions could take up to 1.5 hours. It will be appreciated that there will usually be some very low level ambient light even in "dark" conditions. Conversely, the term "light-adapted" should be understood to mean that the plant is undergoing active light reactions. This will typically be at any point while the plant is exposed to actinic light. While it is preferred that the first and second measurements are made respectively of a dark-adapted and a light-adapted crop, the present technique would also be useful for tracking changes in plant physiology over any time period. For example, measurements could be made in the same locations of a crop in morning and then afternoon conditions to monitor response to activities such as watering or feeding.

It should also be noted that while the terms "first" and "second" are used in respect of the above measurements, i.e. that form these first and second measurement phases, there could also be further measurement phases that take place between the first and second measurement phases.

As mentioned above, the first measurements may conveniently be taken at night, which may be the period between sunset and sunrise, or more typically the period between dusk and dawn. Dusk and dawn are generally to be understood as referring to the points at which the sun is 6° below the horizon. The second measurements may conveniently be taken during the day, which may be the period between dawn and dusk, but more typically the period between sunrise and sunset. While this is preferred, the present method could be performed in an environment that is wholly lit by artificial light, in which case the dark-adapted and light-adapted states may be induced at any time of day. Nonetheless, the present method is advantageous in these contexts as it can be integrated with any desired schedule.

It may be the case that measurement phases are simply executed at regular intervals, e.g. every hour and then naturally some of these measurement phases will occur while the plant is in a dark-adapted state and others will occur while the plant is in a light-adapted state. The method may therefore preferably involve determining whether each measurement is a dark-adapted measurement or a light-adapted measurement using the optical sensor or a second optical sensor. For example, if the optical sensor used for detecting the chlorophyll fluorescence is an imaging sensor, such as a camera, then the overall brightness of the image may be used to determine the light levels at the time of the measurement. This may be combined with images from preceding measurements to gain an understanding of the plant's recent exposure to light. Alternatively, a dedicated light meter may be used to keep a record of light levels.

A particular advantage of this method is that it allows the key measurements of minimal and maximal fluorescence of a dark-adapted crop and maximal fluorescence of a light-adapted plant to be directly measured and correlated, which allows key parameters to be derived for the crop. Therefore, preferably, performing a first chlorophyll fluorescence measurement at one or more different areas comprises, for at least a first area (preferably for a plurality of areas and most preferably for each area), using the light source to irradiate the first area with light configured to induce minimal fluorescence of the dark-adapted crop and using the optical sensor to detect the minimal fluorescence, and using the light source to irradiate the first area with light configured to induce maximal fluorescence of the dark-adapted crop and using the optical sensor to detect the maximal fluorescence, and wherein performing a second chlorophyll fluorescence measurement at the one or more different areas comprises using the light source to irradiate the first area with light configured to induce maximal fluorescence of the light-adapted crop and using the optical sensor to detect the maximal fluorescence. The required average photosynthetic photon flux density to induce these different fluorescence levels will depend on the particular crop type, as will be understood by one skilled in the art.

It should be noted here that each first measurement itself comprises multiple measurement phases. Generally, the minimal and maximal fluorescence will be measured one directly after the other. For example, the crop may be irradiated with light having a low average photosynthetic photon flux density to induce and allow detection of minimal fluorescence, and then irradiated with light having a high average photosynthetic photon flux density to induce and allow detection of maximal fluorescence in that same area, i.e. without any movement by the actuator between the two measurement phases. However, it would also be possible to measure only the minimal fluorescence of each area initially, and then use the actuator return to each area and measure the maximal fluorescence. In such a case, as described above, the actuator should return and aim the light source at the same areas based on the recorded location of the area made when the minimal fluorescence was measured.

The above technique may preferably allow estimation of a minimal fluorescence of (at least) the first area of the light-adapted crop based on the detected minimal and maximal fluorescence of the first area of the dark-adapted crop and based on the detected maximal fluorescence of the first area of the light-adapted crop. As indicated above, this may be derived using the Oxborough and Baker equation. Where multiple areas have their minimal and maximal dark-adapted fluorescence and maximal light-adapted fluorescence measured, this estimation may be performed for each such area, so that the minimal fluorescence of the light-adapted crop at a plurality of areas is determined. Here, the quality of the data obtained may be improved by disregarding the estimated minimal fluorescence of the first area (or any of the plurality of measured areas) of the light-adapted crop based on the estimated minimal fluorescence being equal to or greater than the detected minimal fluorescence of the first area of the dark-adapted crop.

One factor to consider when performing measurements at a distance, such as in the present technique by virtue of the scanning measuring system, is that some measurements may be prone to relatively large uncertainties. To account for this, performing each first chlorophyll fluorescence measurement may comprise repeating the first chlorophyll fluorescence measurement at each area of the crop and averaging the repeated measurements for each area, i.e. to obtain a respective average for each area. Some measurements may be subject to significant uncertainty in their values, therefore repeating a measurement several times and averaging the results may be used to increase confidence in the measured value. Preferably, repeating each first chlorophyll fluorescence measurement comprises, using the actuator, aiming said light source at the corresponding area based on the recorded location of the area in the first instance of the corresponding first chlorophyll fluorescence measurement, using the light source to emit substantially collimated or convergently focussed light so as to irradiate the area with light, and using the optical sensor, detecting chlorophyll fluorescence from the area. In this case, the same technique is used for returning to each measured area to repeat the first measurement as is used to return to each measured area for the second measurements. In some instances, the position of the measured area may have changed, e.g. due to movement of the plant during growth, between repeated measurements of the same area. As will be described further below, some embodiments may be configured to compensate for this and adjust the aim of the light source, and so when the first measurement is repeated, the location of the area may be updated during a repeat of the first measurement and it will be this updated recorded location from the latest repeat of the first measurement that is used in the later second measurement of the same area. While it is preferable to measure each area once before returning sequentially to each area to repeat the first measurements, alternatively each of the repeated measurements could be performed successively for each area in turn. This is generally less desirable as a plant may start to adapt to the light used to make the measurements, and so the act of measuring the fluorescence can affect the repeated measurements.

Similarly, it may be the case that performing each second chlorophyll fluorescence measurement may comprise repeating the second chlorophyll fluorescence measurement at each area of the crop and averaging the repeated measurements for each area, i.e. to obtain a respective average for each area. However, where the second chlorophyll fluorescence measurements are measurements of a light-adapted crop, it will usually not be desirable to average repeated measurements, since the crop will typically continue to adapt to the light and change over time. In the present discussion, a distinction is drawn between a second measurement of each area and a repeat of the first measurement of each area. This is because it is intended that the first and second measurements be taken of a crop in different states or otherwise be different measurements intended for comparison, whereas a repeated measurement should be made of a crop in the same state measured in the same way so that the measurements may be averaged. However, the technique for recording the location of the measured area and then returning to that location to make another measurement is the same for a repeated measurement as it is for a distinct subsequent measurement.

In order to track the evolution of the crop as it adapts to light, in cases where the first measurements are while the crop is in a dark-adapted state and the second measurements are while the crop is in a light-adapted state, it may be preferable to then perform a third chlorophyll fluorescence measurement at the one or more different areas while the crop is in a light-adapted state, wherein performing each third chlorophyll fluorescence measurement comprises: using the actuator, aiming said light source at one of said areas based on the recorded location of the area in the respective first chlorophyll fluorescence measurement; using the light source to emit substantially collimated or convergently focussed light so as to irradiate the area with light; and using the optical sensor, detecting chlorophyll fluorescence from the area. Of course, fourth and further measurements may also be taken. Where a third measurement is to be taken after the second measurements, the recorded location of the or each area may be updated during the second phase.

In one example, each first chlorophyll measurement is performed while the crop is in a dark-adapted state, and a first set of the repeated measurements are repeated measurements of the minimal fluorescence of the dark-adapted crop and a plurality of the first set of repeated measurements are averaged to determine an average minimal fluorescence of the dark-adapted crop and/or a second set of repeated measurements are repeated measurements of the maximal fluorescence of the dark-adapted crop and a plurality of the second set of repeated measurements are averaged to determine an average maximal fluorescence of the dark-adapted crop.

In embodiments in which measurements are repeated, the quality of the data obtained may be improved by disregarding one or more of the repeated measurements based on: a detected intensity of the chlorophyll fluorescence from the area; and a detected size of the area from which chlorophyll fluorescence is detected. In particular, if the detected intensity is low, then the uncertainty on the measurement is likely to be a high percentage of the measurement value. Similarly, if the area from which chlorophyll fluorescence is detected is small, then the uncertainty on the measurement is likely to be a high percentage of the measurement value. For example, if the optical detector comprises a camera, then the measurement of chlorophyll fluorescence may be based on a certain number of pixels in a measurement image, each of which may have one of a range of values, e.g. 0 to 255. The area of chlorophyll fluorescence can only be determined to within one pixel, meaning a high uncertainty where the number of pixels is small. Similarly, intensity can only be measured to the nearest possible value for that pixel, again meaning a high uncertainty for low intensity values. The quality of the data may also be improved by disregarding an averaged chlorophyll fluorescence measurement for one or more areas based on the number of repeated measurements used to calculate the average not meeting a threshold number. That is, the average may be disregarded in cases where the number of repeated measurement contributing to the average is determined not to adequately compensate for the high uncertainty in a particular measurement.

Preferably, performing each first chlorophyll fluorescence measurement may comprise selecting an area to aim the light source at based on one or more captured images of the crop. For example, where the optical sensor is a camera, or where a separate camera is provided which images the crop, then obtaining the first measurement may involve inspecting an image taken of the crop to identify a suitable area and adjusting the aiming of the light source based on the image. For example, it will typically be desirable to take measurements at a range of positions across the crop at roughly equal intervals across two-dimensions. However, it may also be desirable to ensure that each measurement is made on a suitable part of a plant, for example close to the centre of a leaf. Therefore, the light source may be aimed at a predetermined location and then light emitted to irradiate an initial area of the crop and an image captured of the irradiated initial area. Then, based on the position of the light source in the captured image, the actuator may be adjusted to aim the light source at an adjusted area, at which the measurement is to be made. It will then be the position of this adjusted area that is recorded, as described above. It will be appreciated that there may be more than one phase of adjustment to get the light source aimed at a suitable area. As will be appreciated from the above, this process will not need to be repeated for the second measurements (or any other measurements of those same areas), since the light source will merely need to be aimed at the recorded location for each area.

In the above method, recording the location of the area for each first chlorophyll fluorescence measurement preferably comprises recording the position adopted by the actuator while irradiating the area with light. Then, aiming the light source at one of the areas at a later time, e.g. for each second chlorophyll fluorescence measurement, may comprise moving the actuator to the recorded position of the actuator from the corresponding first chlorophyll fluorescence measurement. This provides a very simple way of returning to each

Alternatively, or additionally, recording the location of the area for each first chlorophyll fluorescence measurement may comprise saving a captured image of the area. Again, this captured image may be the image from the optical sensor, if this is a camera, or from a separate camera. Then, aiming the light source at one of the areas at a later time, e.g. for each second chlorophyll fluorescence measurement, may comprise capturing an image of the crop, comparing the captured image of the crop with the saved captured image of the area from the first chlorophyll fluorescence measurement, and adjusting the aim of the light source based on the result of the comparison, e.g. to compensate for movement of the crop between the first and second chlorophyll fluorescence measurements. For example, the image captured during the second measurement may be captured while irradiating the crop with light, and then the irradiated/fluorescing area may be compared between the image saved from the first measurement and the captured image. Alternatively, if the camera is aimed together with the light source, then the images may be directly compared without any irradiating light or fluorescence (since the irradiating light may be assumed to fall in substantially the same position within the field of view of the image), and the position of the actuator adjusted so that a target leaf is in the same position between the two images. In some embodiments, a pattern matching technique may be used in the comparison of the two images. This is particularly useful for compensating for movement of the crop between measurements. If further measurements are to be made in the or each area after the second measurements, then the recorded location of the area may be updated based on the adjustment of the actuator and/or the captured image during the second measurement.

One problem faced, particularly when taking light-adapted measurements, is that these measurements are often made in settings in which the amount of background light can vary, for example due to the use of pulse width modulated grow lights. Such grow lights commonly include light in the same far-red wavelengths associated with chlorophyll fluorescence, and the pulse width modulation of this light source introduces a flicker into any images taken of the plants. This background flicker makes it difficult to determine in any one image the proportion of light coming from chlorophyll fluorescence and the proportion that is merely reflected from the grow lights. Conventionally, this has been addressed by changing the grow lights to remove the use of pulse width modulation, so that any background is constant for all images. However, the present method may involve (particularly preferably for each light-adapted measurement of each area) using an imaging optical sensor to capture an image of the area, and then using a controller to distinguish between a target area containing the area irradiated with light from the light source and at least one background area in a measurement image, and then to adjust the detected intensity in the target area based on the detected intensity in the background area. The target area may typically be identified based on its brightness and its position and shape, i.e. it will typically be a bright point in the image whose position will be confined to certain areas dependent on the alignment of the light source relative to the sensor and the distance to the target. Computer vision techniques may be used to outline the target region more accurately, this could include image subtraction, contouring, averaging or denoising. Any point outside of this area in the image may be expected to contain predominantly reflected light from a grow light or other background source and so may be used to establish a background intensity level in the target area. It will be noted that the advantages of this technique are permitted by the way the method irradiates only a small area of the target and known techniques that bathe the target in light cannot get an instantaneous comparison with an unilluminated background area.

In these embodiments, the background area may be substantially the entire of the measurement image outside of the target area. This may make the background compensation computationally simple. Alternatively, the controller may be configured to select a part of the measurement image outside of the target area as the background area, preferably based on the detected intensities across the measurement image. For example, this may involve computer vision techniques that look to identify an area of the same plant or same leaf as at the target area, or may be based on intensity and proximity in the image to the target area, or may target a particular vertical or horizontal portion of the image to avoid background differences caused by, for example, a rolling shutter.

Adjusting the detected intensity in the target area will typically involve the using the controller to calculate an average background intensity across the background area and subtract the average background intensity from the detected intensity in the target area. For example, an average background intensity may be calculated by summing the intensity of each pixel in the background area and dividing by the number of pixels. Alternatively, the fiftieth percentile could be taken as the median background pixel intensity. The background value may then be subtracted from each pixel in the target area to compensate for artificial background lighting.

As indicated above, preferably the optical sensor comprises an imaging optical sensor, such as a camera, configured to capture an image of each irradiated area of the crop. Alternatively, there may be a non-imaging optical sensor (which may output an analogue signal) used for the chlorophyll fluorescence measurements and a separate imaging sensor for vision-based processes, such as pattern matching in image comparison. In some cases, both an imaging optical sensor and a non-imaging optical sensor may be provided and aimed by the actuator in the manner described above, e.g. by being fixed relative to the light source, so that the advantages of both a non-imaging optical sensor and an imaging optical sensor, particularly one with a small field of view, may be achieved.

Another advantage of using an imaging sensor, particularly in the context of systems in which the light source comprises a laser, is that this can improve the quality of the chlorophyll fluorescence measurement by compensating for the laser irradiation profile. Preferably, the system further comprises a controller configured to identify a target area in a measurement image of the imaging sensor, the target area being a portion of the area irradiated by the one or more light sources, wherein preferably a laser is configured to irradiate a spot-shaped area with light and the target area is a central portion of the irradiated spot-shaped area. Because a laser will typically not have a flat top irradiance profile, some portions of the area irradiated with laser light may not reach the saturation threshold. Therefore, an imaging sensor may allow the controller to isolate a portion of the area irradiated with light in which this threshold is met, and the chlorophyll fluorescence measurement may be detected from this area. The target area may be determined in advance based on the characteristics of the laser or may be determined directly from the measurement image based on detection of reflected laser light or the detected chlorophyll fluorescence profile.

Preferably, the optical sensor has a field of view of no more than 400 $\deg^2$, preferably no more than 200 $\deg^2$, more preferably no more than 50 $\deg^2$, most preferably no more than 25 $\deg^2$. A typical sensor that may be used as the optical sensor may have a field of view of $18° \times 12°$ or less, or more preferably $6° \times 4°$. The use of an optical sensor with a relatively small field of view is particularly preferred for a number of reasons. Significantly, this reduces the signal to noise ration of the chlorophyll fluorescence measurement, i.e. since the irradiated area covers a greater proportion of the field of view of the sensor. Additionally, a smaller field of view means less data to transfer and process when analysing the chlorophyll fluorescence measurements, which speeds up operation of the system and limits power usage.

While it would be possible to have a fixed optical sensor, i.e. which at once views the whole crop, preferably the actuator is configured to move the optical sensor and/or to move one or more optical elements, such as mirrors, relative to the optical sensor so as to enable the optical sensor to detect chlorophyll fluorescence from each area irradiated with light. In other words, the actuator may simultaneously aim the light source and the optical sensor at each area to be irradiated. This therefore uses the same actuator to aim both the light source and the optical sensor and so enables the benefits of a small field of view sensor without any increase in complexity of the system, such as by requiring a dedicated actuator for the optical sensor. In this case, the light source and optical sensor may be fixedly mounted relative to one another. This has the advantage that the position of the irradiated area in the field of view of the optical sensor may change depending on distance to the target as a result of parallax, which can be used to determine the distance to the irradiated area.

Preferably, the optical sensor is capable of high measurement frequency, which would permit more precise measuring of the response curve of the target to the irradiating light. A high measurement frequency in this context may mean a frequency of at least 1 kHz, preferably at least 10 kHz, more preferably at least 100 kHz, most preferably at least 1MHz, which corresponds to a time interval between measurements of at most 1 ms, preferably at most 100 $\mu$s, more preferably at most 10 $\mu$s, most preferably at most 1 $\mu$s. Generally a higher measurement frequency will be preferred, as it will provide better resolution on the fluorescence response curve. Cameras are typically less preferred in this context as they will often have lower frames per second. Instead an optical sensor may be used which is non-imaging and/or outputs an analogue signal, as these are typically able to achieve higher measurement frequencies. Suitable optical sensors may include silicon photodetectors and/or a photodiode.

Particularly preferably, the light source comprises a laser, wherein preferably the laser is configured to irradiate a spot-shaped area with light, although alternatively the laser may be configured to irradiate a line-shaped area. A laser is particularly useful as it produces tightly collimated light and typically irradiates a very small area, and can be selected to use light of a desired wavelength. This is therefore able to meet the required energy density threshold for irradiated areas while using a comparatively low amount of power, and is also capable of working across a wide range of distances. Preferably the laser is an adjustable power laser. This may allow the laser to adjust power to compensate for the distance to the measurement target and/or variation in irradiation area due to the target being inclined relative to the direction of incidence. As an alternative to a laser, the light source may comprise one or more LEDs (light emitting diodes) with collimating or focussing optics.

Preferably, the light source is used to irradiate one or more areas (preferably each areas) each having an area of less than 50 cm$^2$, preferably less than 25 cm$^2$, more preferably less than 5 cm$^2$, even more preferably less than 1 cm$^2$, most preferably less than 5 mm$^2$

Typically, the system used in the method will further comprise an optical filter arranged to block reflected light from the at least one light source and allow the optical sensor to detect light resulting from chlorophyll fluorescence. This may be performed by locating the filter in front of the optical sensor (i.e. between the optical sensor and the area irradiated by the light source), or otherwise in the optical path between the target area and the optical sensor. Typically the light source will emit light having a different wavelength or range of wavelengths than is re-emitted as chlorophyll fluorescence. For example, a light source may be 450 nm and fluorescence may be in the range 650 nm to 750 nm. Providing an optical filter for filtering out the wavelength or wavelength range emitted by the light source enables more accurate measurements of the chlorophyll fluorescence. The wavelengths re-emitted in fluorescence are longer than those emitted by the light source, and so preferably the filter is a long-pass filter, preferably configured to block light having a wavelength of approximately 650 nm or less, or may be a band-pass filter, preferably configured to block light outside of the range 650 nm to 750 nm, preferably outside of the range 650 nm to 700 nm or 700 nm to 750 nm. The use of separate band-pass filters of 650 nm to 700 nm and 700 nm to 750 nm, independently movable into the optical path of the sensor may allow for PSI and PSII fluorescence measurements to be made separately in both the first and second measurements phases of the method. A particularly preferred type of filter is an interference filter. Interference filters are inexpensive, but the filtered wavelengths depend on the angle of incidence. Because only a small area is irradiated with light, the light from across this area will be incident on the filter will substantially the same angle of incidence, meaning an interference filter can be particularly effective. This is especially the case when the optical sensor is movable, since pointing the sensor at the irradiated area will mean light is always incident on the sensor from substantially the same direction, regardless of where the measurement is being made on the canopy.

In some cases it may be preferable to be able to selectively use the filter. For example, the optical filter may be movable relative to optical path of light impinging on the optical sensor in order to selectively block reflected light from the at least one light source, and preferably the optical filter may be located on a filter wheel. This can allow the method to make additional measurement to assess the state of the crop during either or both of the first and second measurement phases. For example, it may be desirable to detect the amount of incident light that is reflected from the target position, or to build an accurate colour picture of the canopy, in order to infer more about the state of the crop. Alternatively, as mentioned above, it may be preferred to switch between different filters, such as a band-pass filters of 650 nm to 700 nm and 700 nm to 750 nm.

Preferably, the actuator has two degrees of freedom so that the plurality of areas irradiated with light (and detected with the optical sensor, if also aimed by the actuator) in both the first and second measurement phases are arranged across two dimensions. Other embodiments could have only one dimension of movement, either by measuring areas along only one direction, or by using a line focussed laser swept across the canopy.

While the system used in the method could operate with an actuator that translates the light source and optionally the optical sensor (or optical elements associated therewith), for example, along orthogonal directions, it is much preferred for the actuator to be configured to rotate the light source and optionally the optical sensor (or optical elements associated therewith) about one or more directions. For example, preferably the actuator has variable yaw and pitch so as to enable the at least one light source to irradiate different areas across two dimensions with light. That is, the actuator may rotate the light source about two different preferably orthogonal rotation axes, which are preferably substantially perpendicular to the direction along which light is emitted. It will be appreciated that the actuator may not directly rotate the light source, and could rotate a body to which the light source (and optical sensor) is mounted. This form of actuator enables a system used in the method to be mounted in a fixed position while still taking chlorophyll measurements from a relatively wide area.

## BRIEF DESCRIPTION OF DRAWINGS

The invention will now be described with reference to the accompanying drawings, of which:

Figure 1 is a flow diagram illustrating the steps of a method according to an embodiment;
Figure 2 is a schematic illustration of a system suitable for performing the method of Figure 1;
Figure 3 is a perspective view of a system suitable for performing the method of Figure 1;
Figure 4 is a perspective view of part of the system of Figure 3;
Figure 5 is a side view of part of the system of Figure 3;
Figure 6 is a graph illustrating light emitted by a light source during a chlorophyll fluorescence measurement;
Figure 7 is a graph illustrating fluorescence over time of a crop in a dark-adapted and light-adapted state when subjected to light illumination associated with a selection of chlorophyll fluorescence measurements;
Figures 8A to 8C are respective stages of a flow diagram illustrating the steps of a method according to an embodiment; and
Figure 9 is a measurement image taken while performing the method according to an embodiment.

## DETAILED DESCRIPTION

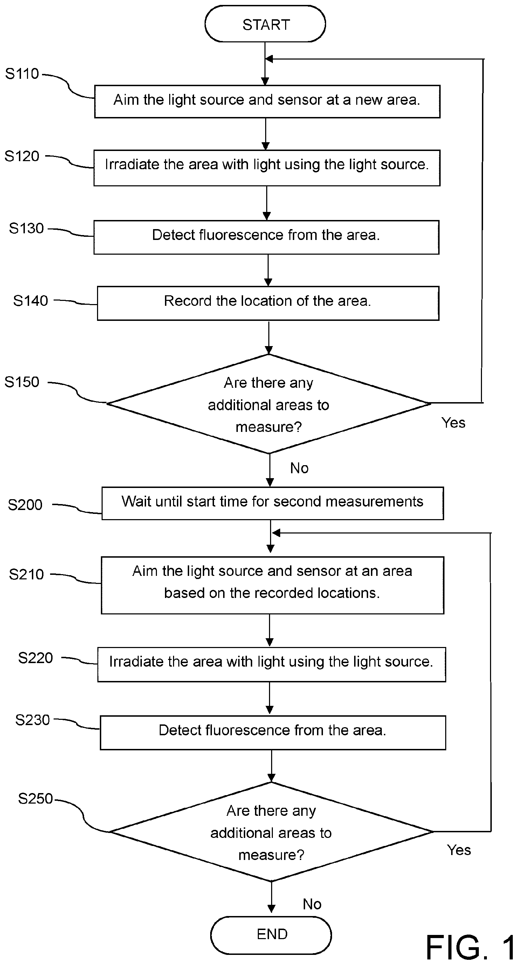

A method according to the invention and a system for performing that method will firstly be described with reference to Figures 1 to 5.

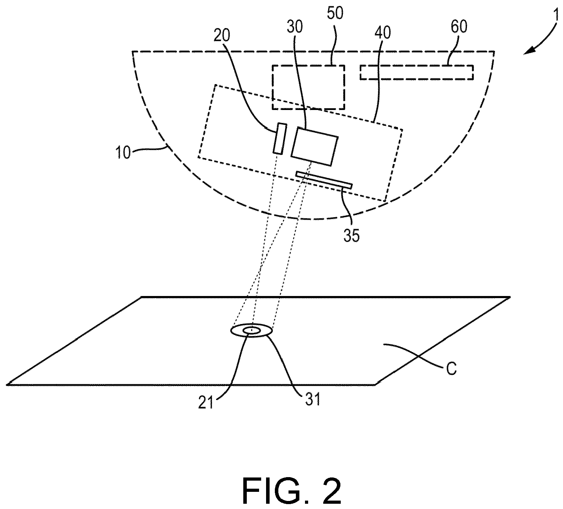

Figure 1 is a flow diagram illustrating the steps in a method according to a first embodiment of the invention. Figure 2 shows a system suitable for performing the method of Figure 1, illustrating the primary components and their use in taking a measurement. The system 1 comprises a dome-shaped housing 10, which encloses a laser 20 and a camera or non-imaging optical sensor 30 mounted on a support 40. The support is connected to an actuator 50, which moves the support 40 within the housing 10 so as to change the direction in which the laser 20 and optical sensor 30 are pointed. The housing also encloses a controller 60, which controls the operation of the actuator, laser and optical sensor.

As shown in Figure 2, the dome-shaped housing 10 is mounted by its substantially flat base over a crop C of plants being grown in an area below, so that the dome part of the housing projects downwards. In this arrangement, the support 40 is manoeuvred by the actuator 50 to point the laser 20 and optical sensor 30 at a target in the crop C below. The laser 20 irradiates an area 21 with light and is controlled by the controller 60 to emit a saturation or measurement pulse in accordance with the type of measurement being made. The target may be between 0.5 and 1 meter from the system 1, although the system may be capable of working over a much wider range of distances, and the laser spot size at this distance may be around 2 mm in diameter. The optical sensor 30 has a field of view 31 of the canopy which encompasses the area 21 irradiated by the laser light. The optical sensor may have a field of view corresponding to an area of the canopy of around 20 $cm^2$ at the distance of between 0.5 and 1 meter. A filter 35 is positioned between the optical sensor 30 and the target so that the light emitted from the target as chlorophyll fluorescence is detected by the optical sensor 30 and the reflected light from the laser spot 21 is filtered out by the filter 35.

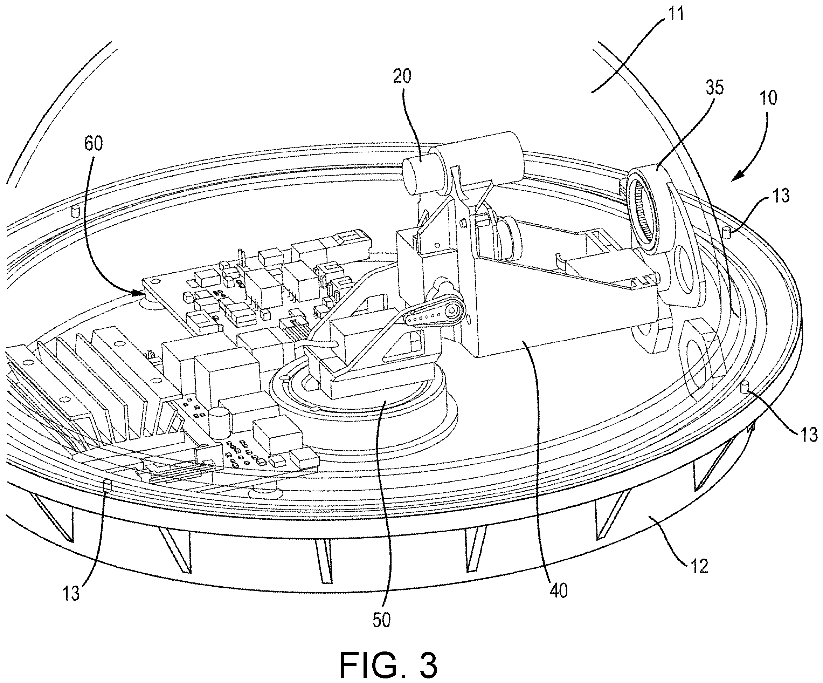

Figure 3 shows the system in more detail with the optical sensor 30 omitted and shows that the dome-shaped housing 10 comprises a transparent dome-shaped cover 11, which is attached to a circular base 12 with a raised rim at its periphery. The cover 11 is attached to the circular base 12 by screws (not shown) that connect through screw holes 13 in a peripheral lip of the cover 11, and fasten the cover 11 to the base 12. The remaining components of the system are then enclosed within the housing, being contained between the base 12 and the cover 11, with the optical components, i.e. the laser 20 and the optical sensor 30 still able to operate through the transparent cover 11. The entire system 1 may be mounted over a canopy by attaching the base 12 to a surface over the canopy, such as the ceiling, via screw holes (not shown) or other attachment means of the base 12.

Within the housing 10 are control electronics 60. This includes a controller for the actuator 50, a controller for the laser 20, and a controller for the optical sensor 30, which are coordinated to take a series of measurements of different targets in the crop C below the system. These control electronics are mounted on the base 12 of the housing 10 so that they are stationary during use.

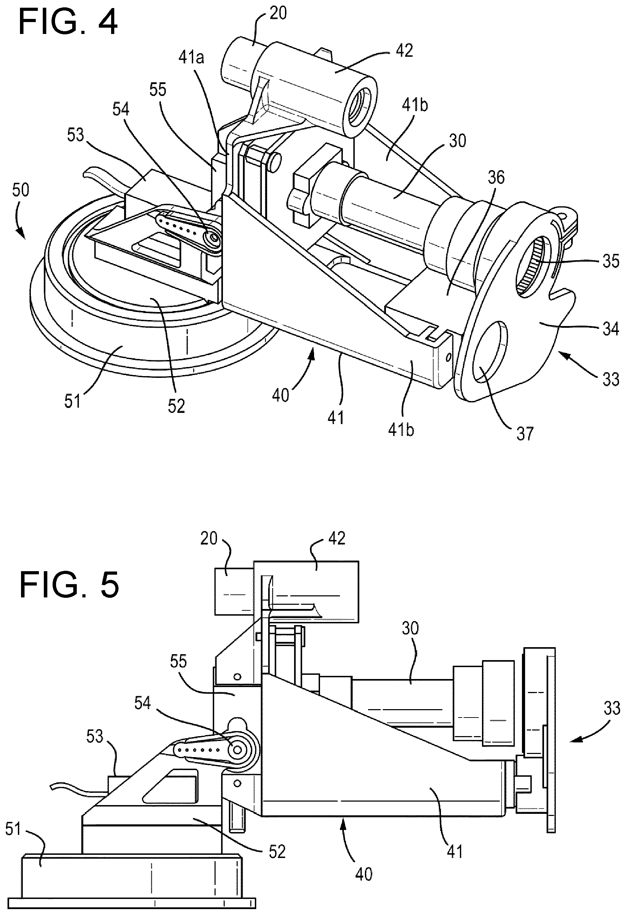

Also within the housing 10, as mentioned, are the laser 20, optical sensor 30, support 40 and actuator 50, which are shown in isolation in Figures 4 and 5. As shown in these figures, in this embodiment the optical sensor is a 30. The actuator 50 comprises a ring-shaped base 51 inside of which is mounted a platform 52 having a circular part that is received in the base 51 and a mounting portion. On the mounting portion is located a pan servo motor 53, which operates through a central axis through the platform and is preferably capable of rotating the platform through 360°. Also mounted to the platform 52 via an axis 54 is a tilt servo motor 55. The tilt servo motor is preferably capable of rotating 90° in this configuration, relative to the platform 52. The actuator, in this case, comprises the combination of the pan servo motor 53 and the tilt servo motor 55. An actuator of this type, with variable yaw and pitch, is able to point the laser and the camera across a wide area and so survey a large crop area with a small system footprint.

The support 40 is a piece of moulded plastic that attaches to the housing of the tilt motor 55 of the actuator 50 and supports both of the laser 20 and the camera 30, along with the filter 35. The support 40 comprises, in particular, a camera-holding portion 41 and a laser holding portion 42. These are arranged so that both the laser 20 and the camera 30 are pointed along the same direction, i.e. parallel with one another, with the laser 20 being spaced a few centimetres above the camera 30.

The camera-holding portion 41 includes a rear plate 41a, to which the camera 30 is attached, pointing away from the rear plate and towards the target. It also comprises two arms 41b, which extend forwards from the rear plate 41a, beneath the camera barrel. The two arms connect at their forward end to the filter assembly 33. The filter assembly comprises a filter wheel 34 connected to a filter motor 36 mounted on end of the arms 41b. The filter motor 36 operates to rotate the filter wheel 34 so that either filter 35 or filter 37 within the filter wheel may be placed in front of the camera 30. The filter 35, which is held in front of the lens of the camera, may be a long-pass interference filter, which filters out perpendicularly incident light having a wavelength of less than 650 nm, to allow the camera 30 to measure the fluorescence in the range 650 to 750 nm, or may be a band-pass filter, blocking all light outside of the range 650 to 750 nm. Filter 37 may be a different filter, such as a band-pass filter of 650 to 700 nm or 700 nm to 750 nm, for acquiring PSI or PSII fluorescence in isolation. Alternatively, filter 35 may be a band-pass filter of 650 to 700 nm and filter 37 a band-pass filter of 700 nm to 750 nm to allow the system to measure both PSI and PSII fluorescence independently of one another.

The laser-holding portion 42 of the support 40 is a substantially cylindrical sleeve that is open at both ends, with a smaller opening at the front end, through which the laser beam is emitted. The laser-holding portion 42 receives a substantially cylindrical laser in the open rear end, which points forwards through the open front end.

The laser 20 itself is configured to emit collimated light having a wavelength of approximately 450 nm, with a beam diameter of 3 mm and should be capable of delivering saturation pulses lasting approximately one second to the target having an average photosynthetic photon flux density (PPFD) of 8000 $\mu mol \ m^{-2} \ s^{-1}$. The laser should also be capable of delivering measurement pulses lasting between 1 $\mu s$ and 10 ms.

The camera 30 may be an OV9281 manufactured by OmniVision® of 4275 Burton Drive, Santa Clara, California 95054 USA. This camera may be configured with a relatively small field of view of 6° × 4°, which decreases the noise in the signal and increases the sensitivity to the area irradiated by the laser. As mentioned previously, the field of view of the camera must be large enough for the laser spot to be visible across the working range of the system. In embodiments in which the laser 20 and the camera 30 are pointed parallel to one another, the laser spot will be in the centre of the field of view at infinity, and will be closer to the top of the field of view the closer the target is to the system. Indeed, as we have mentioned before, the position of the laser in the field of view of the camera, as well as the spot size, can be used to determine the distance to the target. In other systems, the laser and the camera may not be parallel and may instead define a small but fixed angle in the direction they are pointed, so that the laser spot is in the middle of the field of view of the camera roughly in the centre of the working range of the system. This may cause the spot to move across the full field of view of the camera depending on the distance to the target, and so offer greater sensitivity in measuring the distance to the target. An angle of approximately 8° has been found to be suitable for a typical separation distance of camera and laser and for a working distance in the range 0.5 to 1 m, although it will be appreciated that these can be configured as needed depending on the particular system installation, including the working range and the spacing of the camera and laser. In other embodiments, the angle between the laser and the camera could be adjustable. The control system may adjust the angle between the laser 20 and the camera 30 until the spot is in the centre of the field of view, and then the distance to the target determined by the angle between the camera and the laser needed to achieve this centring of the laser spot.

Using this system, the method illustrated in Figure 1 may be performed. This method is preferably initiated while the crop is in a dark-adapted state, i.e. at night. The method begins with a first step S110 of aiming the laser and camera at a new target area. The movement of the laser 20 to aim the light from the laser is performed by using the controller 60 to control the pan servo motor 53 and the tilt servo motor 55. This panning and tilting is capable of pointing the laser 20 and camera 30 at any position below the system. With the system 1 installed over the crop C, it may be configured to take measurements of the crop at each of a two-dimensional array of positions. These may be pre-programmed. For example, the system may be programmed to make a measurement at 10 cm interval along two orthogonal directions defining a two-dimensional square array of measurement positions across the crop. In other embodiments, these pre-programmed positions may be merely a starting point, and the aim of the laser may be adjusted based on images taken of the crop, e.g. so that the laser is aimed at the centre of a leaf. For example, the laser 20 and camera 30 may be aimed at a first pre-programmed position and an image captured. The laser 20 may be either on in this image, to precisely demonstrate its position on the crop, or the approximate position of the laser may be known, e.g. the centre of the field of view. Computer vision techniques may then be used to assess the captured image and select a leaf to target with the laser spot. Based upon the position of this leaf in the captured image, the actuator may be controlled to adjust the pan and tilt angles to aim the laser at the desired target.

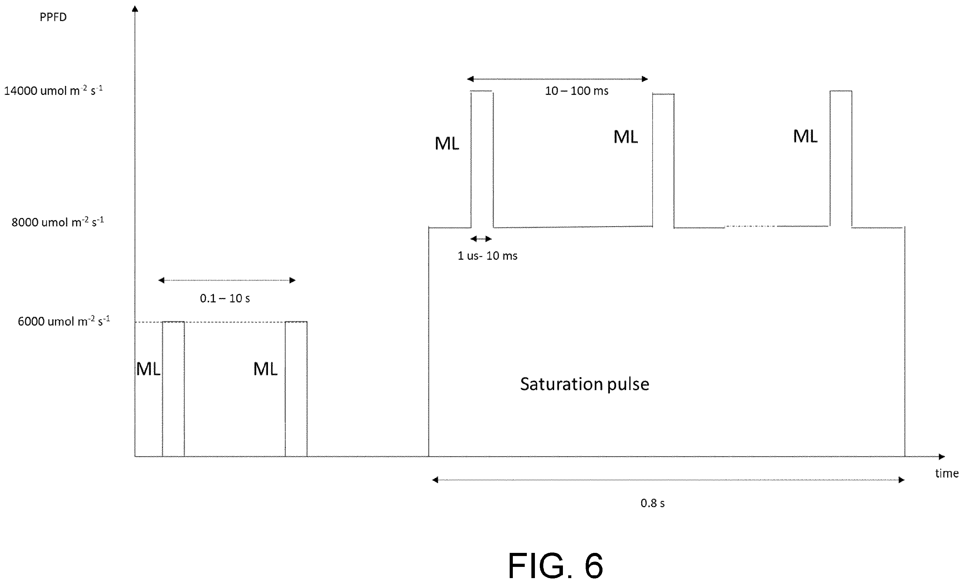

With the laser 20 and camera 30 now aimed at a target area, in step S120, the laser is controlled to emit light in order irradiate the target area with light. In this embodiment, each measurement may comprise two phases: a measurement of the minimal fluorescence of the dark-adapted crop $F_0$ and a measurement of the maximal fluorescence of the dark-adapted crop $F_m$. These two phases will require the laser to be controlled to emit light sufficient to induce these fluorescence levels. Figure 6 is a graph showing how the laser may be controlled in one embodiment. The y-axis illustrates the PPFD, i.e. amplitude or intensity of the light irradiating the target area, in units of $\mu$mol m$^{-2}$ s$^{-1}$ and the x-axis illustrates time. As can be seen in the graph, in a first measurement phase, the target is irradiated with a series of measurement pulses (ML) in order to make an $F_0$ measurement. Each measurement pulse is formed by turning the light from an initial off state to an on state having a specified intensity for the $F_0$ measurement. These measurement pulses may be repeated a series of times in the first measurement phase. Each measurement pulse has a PPFD of about 6000 $\mu$mol m$^{-2}$ s$^{-1}$ and a duration of about 1 $\mu$s to 10 ms. The period between each pulse may be between 0.1 s to 10 s. In a second measurement phase, the plant is irradiated with a saturation pulse in order to make an $F_m$ measurement. The saturation pulse lasts about 0.8 s. In the saturation pulse, the light is initially turned on to a first amplitude of around 8000 $\mu$mol m$^{-2}$ s$^{-1}$ and the light is pulsed to a higher amplitude of about 14000 $\mu$mol m$^{-2}$ s$^{-1}$. These pulses superimposed on the 8000 $\mu$mol m$^{-2}$ s$^{-1}$ pulse have a duration of about 1 $\mu$s to 10 ms and a period of about 10 ms to 100 ms.

In step S130, the fluorescence of the crop from the irradiated area is detected using the camera 30. This method may comprise capturing an image with the camera 30 configured to detect the wavelength range of chlorophyll fluorescence, e.g. 640 nm to 850 nm. If a filter is used to block out reflected laser light, then to determine the intensity of the chlorophyll fluorescence the irradiated area may be identified in a captured image, which will typically appear as a comparatively brighter roughly circular spot in the image. The method may comprise isolating a central region of this bright spot as the measurement area. Then, the intensity of the fluorescence may be determined from the number of bright pixels in the image and the brightness of those pixels. For example, the brightness of each pixel may be stored as an 8-bit integer, resulting in a range of possible values from 0 to 255. Since both a minimal fluorescence and a maximal fluorescence are measured in this method, a respective image must be captured at the appropriate time during irradiation with light configured to induce these fluorescence levels.

The images captured in step S130 may also be used to confirm that the measurements were taken while the crop was in a dark-adapted state. This may comprise determining the average pixel intensity, as a reflection of the overall light levels at the time of the image. This average may be compared to a threshold value set during calibration of the system associated with the transition between dark-adapted and light-adapted states. The detected average light level may then be stored so as to keep a track of the plant's light exposure over the course of future measurements.

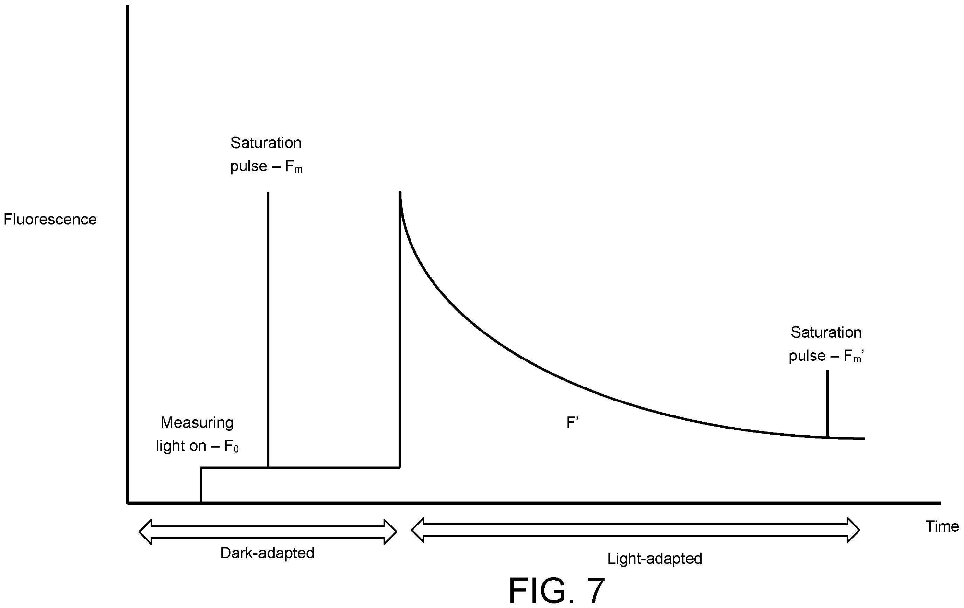

While step S130 is shown as occurring after step S120 in the Figure, it will be appreciated that these largely occur concurrently, and indeed the camera will need to detect chlorophyll fluorescence during both the first phase in which the crop is irradiated with only measurement pulses and the second phase in which the crop is irradiated with the saturation pulse in order to detect both the minimal and maximal fluorescence. Figure 7 is a graph that can be used to understand the fluorescence that will be detected as a result of the light irradiated onto the crop in step S120. This figure shows a phase in which the crop is dark-adapted, which is when the present steps are being carried out. In this dark adapted phase, a low level fluorescence, $F_0$, is detected in response to the series of measurement pulses (ML) and then a high fluorescence, $F_m$, is detected in response to the saturation pulse.

In step S140, the location of the irradiated area is recorded. While step S140 is illustrated as having occurred after steps S120 and S130, this step could be performed at any time after having aimed the laser at the target area. In the present embodiment, recording the location of the area comprises recording the positions of the pan servo motor 53 and the tilt servo motor 55.

In step S150, the controller checks whether there are any further areas to be measured. As mentioned above, there may be a predetermined array of positions at which measurements are to be taken and the controller may check whether measurements have been taken at each one of these positions. In other embodiments, there may simply be a number of measurements required without fixed predetermined positions.

If the controller determines in step S150 that there are further measurements required, then it returns to step S110, and the controller controls the actuator to aim the laser 20 and camera 30 at a new area. As mentioned above, this second area may be pre-programmed, in which case the actuator need only move the laser to aim at the new area, or the pre-programmed position may be used a starting point and the aim of the laser may be adjusted based on images taken of the crop at the pre-programmed position. The method then repeats steps S120, S130 and S140 to perform the required measurements of this second area and record the location of the second area before returning again to the decision of step S150.

If, in step S150, it is determined that all of the required positions have been measured, then in the present embodiment the method will continue to step S200, in which the system waits until a start time for the second measurements to be performed. In the present method, these second measurements are to be taken while the crop is in a light-adapted state. Step S200 may therefore comprise waiting to a set time when it is known that the crop will be exposed to sunlight. Step S200 could alternatively be performed by waiting until a particular ambient light level is detected.

Once it is time to perform the second measurements, the method moves on to step S210, in which the laser 20 and camera 30 are aimed at one of the areas previously measured during the first measurements performed in steps S110 to S140. The controller does this by retrieving the locations recorded in step S140. The controller selects one of the areas measured in the steps S110 to S140 and controls the pan servo motor 53 and the tilt servo motor 55 to adopt the same position adopted during measurement of that corresponding area.

In step S220, the area now aimed at is irradiated with light using the laser 20. In this embodiment, since the second measurement for this area is being performed on a light adapted plant, the only measurement that is of interest may be the measurement of maximal fluorescence of the light-adapted crop. Therefore, the crop may be exposed only to a saturation pulse, as shown in Figure 6 and described above.

In step S230, the fluorescence of the crop from the irradiated area is detected using the camera 30 using the same principles described above with respect to step S130. While step S230 is shown as occurring after step S220 in the Figure, it will again be appreciated that these largely occur concurrently. Figure 7 is a graph that can be used to understand the fluorescence that will be detected as a result of the light irradiated onto the crop in step S220. This figure shows a phase in which the crop is light-adapted, which is when the steps S210 to S240 are being carried out. In this light-adapted phase, plant fluorescence gradually decays due to quenching as the plant adapts to the light and this fluorescence curve is denoted F'. A spike in fluorescence, $F_m'$, is then detected in response to the saturation pulse.

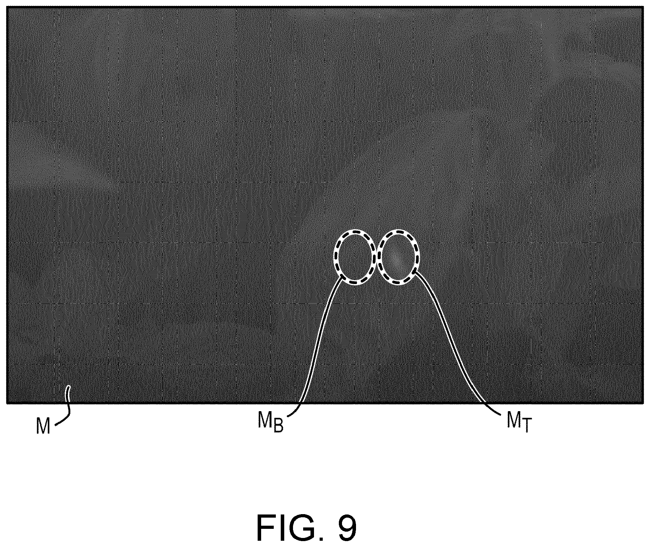

As described above, one issue that may affect the image taken with the camera 30 while the crop is in a light-adapted state is that the level of background light, e.g. from grow lights, may distort the detected fluorescence level from the irradiated area, and so optionally, the method may involve compensating for background light levels. Figure 9 shows one measurement image M taken using the camera through a band-pass filter. A background compensation technique involves identifying a target area $M_T$ containing the pulse-induced fluorescence. This area is typically identified as the brightest area conforming to the expected profile of the light source; in this case, the target is expected to be a roughly circular spot. Then, the controller identifies a background area $M_B$ in the measurement image M. In some embodiments, the background may simply be the entire area outside of the target area $M_T$; however, in this embodiment, the controller identifies only a part of the measurement image outside of the target area to serve as the background area. This may be, for example, a comparably shaped and sized area adjacent to the target area, or may involve selecting a portion of the same plant or leaf as contained in the target area using computer vision techniques. To compensate for any background light not due to chlorophyll fluorescence, the controller determines the average intensity of each pixel in the background area $M_B$. The controller may then subtract this average background intensity from each pixel in the target area $M_T$ in order to get a background adjusted measurement of chlorophyll fluorescence.

In step S240, the controller checks whether there are any additional areas to measure. In this case, the controller may check to see whether all of the areas measured in steps S110 to S140 have been measured. If it is found that there are additional areas to measure, then the method returns to step S210 and the controller controls the actuator to aim the laser 20 and camera 30 at a different area of the crop. The controller will select a different one of the areas measured in steps S110 to S140 and control the actuator to point the laser 20 and the camera 30 at this area based on the recorded location of that area, i.e. the position adopted by the actuator during the first measurement and a saved image captured during the first measurement, in the manner described above. Then, the irradiation and detection steps of S220 and S230 are repeated, before the controller again checks if all areas have been measured a second time.

Once the controller determines that all areas have had a second measurement taken, then the method is finished.

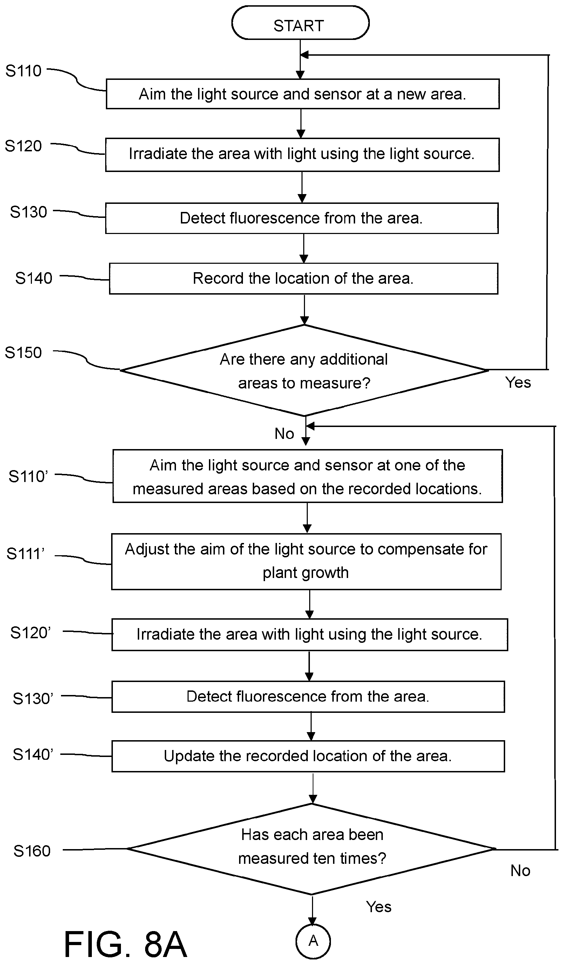

Another embodiment of the method will now be described with reference to Figures 8A to 8C.

In this embodiment of the method, the method begins by making first measurement of a dark-adapted crop at each of a plurality of areas. This aiming the light source in a step S110, irradiating the area with light using the laser in step S120 and detecting chlorophyll fluorescence from the irradiated area in step S130. These steps are carried out identically to the steps described with reference to Figure 1. In step S140, the location of the measured area is recorded. In this embodiment, this step comprises recording the position of the pan servo motor 53 and the tilt servo motor 55 and saving an image of the area captured using the camera while in this adopted position. Step S150 checks whether all areas have been measured and repeats steps S110, S120, S130 and S140 for any additional areas, as outlined above. Once there are no further areas to measure, the method moves on from step S150 to repeat the first measurement at each location while the crop is still in this dark adapted state.

In particular, once it has been determined in step S150 that there are no further areas to measure, the method proceeds to step S110', in which the controller uses the actuator to aim the laser 20 and camera 30 at one of the areas already measured based on the recorded locations. It does this by adopting the same pan and tilt position of the actuator that has been recorded for the corresponding area.

In this embodiment, a further step S111' of aiming the light source is included, in which the aim of the light source is adjusted to compensate for plant growth. This is performed by capturing an image of the crop at this previously adopted position of the pan servo motor 53 and the tilt servo motor 55 using the camera 30. This new captured image may then be compared to the saved captured image of the corresponding area from step S140. A pattern matching computer vision technique is then be used to locate the same part of the leaf that was irradiated in the first measurement in the new captured image, and to adjust the position of the pan servo motor 53 and the tilt servo motor 55 so that this area is targeted by the laser. The target area may be set as an area of a predetermined size, w × h, centred on the position of the laser spot in the saved captured image. A pattern matching technique may then start by selecting area of size w × h in the top left of the new captured image and comparing the intensity of each pixel with the intensity of the corresponding pixel in the target area. The algorithm may then move the selected area right by one pixel before repeating the comparison, and so on until it reaches the right side of the image. Having completed a row, the algorithm may return to the left side of the image and move one pixel down, before continuing to compare and then displace the selected area to the right. This process is repeated until each area of size w × h in the new captured image has been scanned. Then, a matching area may be determined based on the compared intensities, for example with the matching area being determined as the area with the lowest average intensity difference compared with the target area. This matching technique may be performed on greyscale versions of the captured image, or could perform the comparison over each colour channel when using coloured images. In alternative examples, the algorithm may search in blocks of different sizes and use different steps to speed up the process.

Once the aim of the light source has been adjusted, the method moves on to step S120' and S130', in which the first measurement for this area is repeated. In particular, in step S120', the area is irradiated with light in the same manner as step S120. It is important here that the laser is driven in the same manner as in step S120, e.g. with the irradiation profile shown in Figure 6, so that the measurement is a true repeat of the previous measurement in this area. In step S130', the fluorescence of the crop from the irradiated area is detected using the camera 30 in the same manner described above and this is saved by the controller as a second instance of the first measurement for this area. Again, while step S130' is shown as occurring after step S120' in Figure 8A, it will be appreciated that these largely occur concurrently, and indeed the camera will need to detect chlorophyll fluorescence during both the first phase in which the crop is irradiated with only measurement pulses and the second phase in which the crop is irradiated with the saturation pulse in order to detect both the minimal and maximal fluorescence.

In step S140', the recorded location of the area is updated to reflect any change in the aiming of the laser 20 that has occurred as a result of step S111'. Again, this step comprises recording the new position adopted the pan servo motor 53 and the tilt servo motor 55 and saving an image of the area captured using the camera 30 after the aiming of the laser 20 was adjusted. Once again, while step S140' is illustrated as occurring after steps S120' and S130', it will be appreciated that this can occur at any time after step S111', in which the aim was adjusted.

In step S160, the method checks whether each area has been measured ten times. While ten repeats of the first measurement at each area is chosen here, any number of repeats could be required, including only one repeat. If it is determined that each area has not received the required number of measurements, then the method returns to step S110' and the light source is aimed at the next area from the array of areas from which measurements are taken. Again, the aim of the light source is adjusted in step S111' based on the updated location of the area (which may have been updated in an earlier repeat), and then irradiates the area in step S120', detects fluorescence in step S130' and updates the recorded location of the area in step S140'.

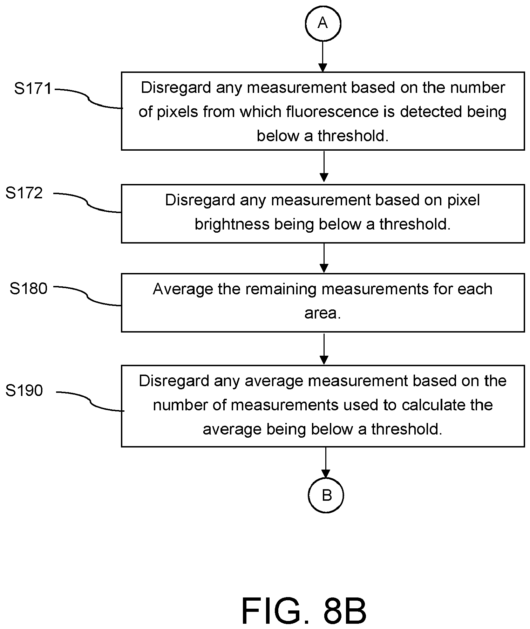

Once it is determined that the required number of repeats have been performed in step S160, the method proceeds to a data processing phase, shown in Figure 8B. In step S171, the method disregards any maximal fluorescence measurements $F_m$ or minimal fluorescence measurements $F_0$ where the number of pixels from the corresponding captured image used in making the measurement is below a threshold value, for example 3. This is performed because the number of pixels in a region of a digital image can only be to the nearest integer value and the uncertainty on the size of the area becomes greater as the number of pixels decreases.

Next, in step S172, the method disregards any maximal fluorescence measurements $F_m$ or minimal fluorescence measurements $F_0$ where the average brightness of the pixels is below a threshold value, for example 5, on the scale from 0 to 255. Again, this is because the brightness of each pixel can only be to the nearest integer value, meaning lower brightness pixels have a higher uncertainty.

As a further check on the $F_0$ and $F_m$ measurements, the method may involve calculating $F_v$ for each area and disregarding the $F_0$ and $F_m$ measurements if $F_v$ is less than or equal to zero. In other words, $F_0$ and $F_m$ measurements are disregarded if $F_0$ is the same as or greater than $F_m$.

Once these low quality measurements are disregarded, in step S180, the method averages the remaining maximal fluorescence measurements $F_m$ for each area to obtain an average maximal fluorescence measurement and averages the remaining minimal fluorescence measurements $F_0$ for each area to obtain an average minimal fluorescence measurement.

Finally, in step S190, the method disregards any of these average measurements where the number of measurements used to calculate these averages falls below a threshold value, which could include disregarding only averages that are based on a single measurement value.

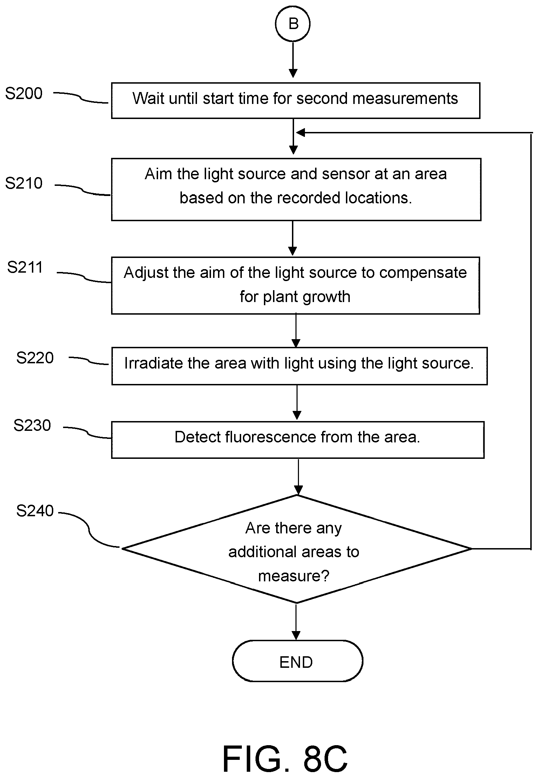

With the data from the first measurements processed in this manner, the method now moves on to the second measurements, illustrated in Figure 8C.

This begins with step S200, in which the system waits until a start time for the second measurements to be performed. Again, in the present method, these second measurements are to be taken while the crop is in a light-adapted state, compared to the dark-adapted state for the first measurements and each repeat of the first measurement. Step S200 may therefore comprise waiting to a set time when it is known that the crop will be exposed to sunlight or artificial light.

Then, in step S210, the laser 20 and camera 30 are aimed at one of the areas previously measured during the first measurements. The controller does this by retrieving the recorded locations, which may have been updated in the final repeat of the first measurement for each area in step S140'. The controller selects the first of the areas measured and controls the pan servo motor 53 and the tilt servo motor 55 to adopt the same position adopted during measurement of that corresponding area.

Again, in this embodiment, the method is configured to compensate for any growth of the plant since the preceding measurement, and so in step S211, the aim of the laser 20 and camera 30 is adjusted. As described above, this is performed by capturing an image of the crop at this previously adopted position of the pan servo motor 53 and the tilt servo motor 55 using the camera 30. This new captured image may then be compared to the latest saved captured image of the corresponding area from step S140'. Again, a pattern matching computer vision technique is then be used to locate the same part of the leaf that was irradiated in the first measurements in the new captured image, and to adjust the position of the pan servo motor 53 and the tilt servo motor 55 so that this area is targeted by the laser 20.

In step S220, the area now aimed at is irradiated with light using the laser 20. Again, in this embodiment, the second measurement for this area is being performed on a light adapted plant, and so the only measurement that is of interest may be the measurement of maximal fluorescence of the light-adapted crop. Therefore, the crop may be exposed only to a saturation pulse, as described above.

In step S230, the fluorescence of the crop from the irradiated area is detected using the camera 30 using the same principles described above. Again, while step S230 is shown as occurring after step S220 in the Figure, it will again be appreciated that these largely occur concurrently.

In step S240, the controller checks whether there are any additional areas to measure. In this case, the controller may check to see whether all of the areas for which there was an acceptable average measurement obtained measured in steps S110 to S1460 have been measured. If it is found that there are additional areas to measure, then the method returns to step S210 and the controller controls the actuator to aim the laser 20 and camera 30 at a different area of the crop. The laser will be adjusted again in step S211 before the irradiation and detection steps of S220 and S230 are repeated again for this next area.

Once the controller determines that all areas have had a second measurement taken, then the method is finished.

The above method therefore provides the user with an average minimal fluorescence of a dark adapted crop $F_0$, an average maximal fluorescence of a dark adapted crop $F_m$, and a maximal fluorescence of a light-adapted crop $F_m'$. From these values, an estimated minimal fluorescence of a light-adapted crop $F_0'$ may be obtained for each area using the Oxborough and Baker equation set out above. To check this value, the estimated minimal fluorescence of a light-adapted crop is disregarded if the estimated value is equal to or greater than the average minimal fluorescence of the corresponding area area of the dark-adapted crop.

The above method describes one repeated set of measurements taken while the crop is in a dark-adapted state and one set of measurements taken while the crop is in a light-adapted state. However, it will be appreciated that the present method may involve several dark-adapted measurement phases during the course of one night and similarly several light-adapted measurement phases during the course of one day. As described above, the measurement locations may be continuously updated over those measurement phases to account for plant growth. Thus, the first light-adapted measurements (often referred to in the context of the present disclosure as a "second" measurement) should be made based on the updated locations of the final set of dark-adapted measurements.

While the measurement locations are described above as being continuously updated, it is generally only required that the measurement locations for any light-adapted plant correspond to the measurement locations for the dark-adapted measurements taken the preceding night. Therefore, regardless of whether the recorded locations are updated to compensate for plant growth, the method may involve selecting a new set of areas to measure at the beginning of each night. These new locations will then be measured over the following night-day cycle in either of the ways described above, i.e. either by simply returning to the same position of the actuator, as described with regard to Figure 1, or by using a pattern matching computer vision technique to find the same area irradiated previously, as described with reference to Figures 8A to 8C.

## Claims

1. A method of measuring chlorophyll fluorescence, the method comprising:

   performing a first chlorophyll fluorescence measurement at one or more different areas of a crop, wherein performing each first chlorophyll fluorescence measurement comprises:

   using an actuator configured to controllably direct the light from a light source, aiming said light source at an area of the crop; using the light source to emit substantially collimated or convergently focussed light so as to irradiate the area with light; using an optical sensor, detecting chlorophyll fluorescence from the area; and using a controller, recording the location of the area; and then

   performing a second chlorophyll fluorescence measurement at the one or more different areas, wherein performing each second chlorophyll fluorescence measurement comprises:

   using the actuator, aiming said light source at one of said areas based on the recorded location of the area in the respective first chlorophyll fluorescence measurement; using the light source to emit substantially collimated or convergently focussed light so as to irradiate the area with light; and using the optical sensor, detecting chlorophyll fluorescence from the area.

2. A method according to claim 1, wherein each first chlorophyll measurement is performed while the crop is in a dark-adapted state, and wherein each second chlorophyll measurement is performed while the crop is in a light-adapted state.

3. A method according to claim 2, wherein performing a first chlorophyll fluorescence measurement at one or more different areas comprises, for at least a first area, using the light source to irradiate the first area with light configured to induce minimal fluorescence of the dark-adapted crop and using the optical sensor to detect the minimal fluorescence, and using the light source to irradiate the first area with light configured to induce maximal fluorescence of the dark-adapted crop and using the optical sensor to detect the maximal fluorescence, and wherein performing a second chlorophyll fluorescence measurement at the one or more different areas comprises using the light source to irradiate the first area with light configured to induce maximal fluorescence of the light-adapted crop and using the optical sensor to detect the maximal fluorescence.

4. A method according to claim 3, comprising estimating a minimal fluorescence of the first area of the light-adapted crop based on the detected minimal and maximal fluorescence of the first area of the dark-adapted crop and based on the detected maximal fluorescence of the first area of the light-adapted crop, and preferably comprising disregarding the estimated minimal fluorescence of the first area of the light-adapted crop based on the estimated minimal fluorescence being equal to or greater than the detected minimal fluorescence of the first area of the dark-adapted crop.

5. A method according to any of the preceding claims, comprising repeating the first chlorophyll fluorescence measurement at each area of the crop and averaging the repeated measurements for each area, wherein preferably repeating each first chlorophyll fluorescence measurement comprises, using the actuator, aiming said light source at the corresponding area based on the recorded location of the area in the first instance of the corresponding first chlorophyll fluorescence measurement, using the light source to emit substantially collimated or convergently focussed light so as to irradiate the area with light, and using the optical sensor, detecting chlorophyll fluorescence from the area.

6. A method according to claim 5, wherein each first chlorophyll measurement is performed while the crop is in a dark-adapted state, and wherein a first set of the repeated measurements are repeated measurements of the minimal fluorescence of the dark-adapted crop and a plurality of the first set of repeated measurements are averaged to determine an average minimal fluorescence of the dark-adapted crop and/or wherein a second set of repeated measurements are repeated measurements of the maximal fluorescence of the dark-adapted crop and a plurality of the second set of repeated measurements are averaged to determine an average maximal fluorescence of the dark-adapted crop.

7. A method according to claim 5 or claim 6, comprising disregarding one or more of the repeated measurements based on: a detected intensity of the chlorophyll fluorescence from the area; and a detected size of the area from which chlorophyll fluorescence is detected.

**8.** A method according to any of claims 5 to 7, comprising disregarding an averaged chlorophyll fluorescence measurement for one or more areas based on the number of repeated measurements used to calculate the average not meeting a threshold number.

**9.** A method according to any of the preceding claims, wherein performing each first chlorophyll fluorescence measurement comprises selecting an area to aim the light source at based on one or more captured images of the crop.

**10.** A method according to any of the preceding claims, wherein recording the location of the area for each first chlorophyll fluorescence measurement comprises recording the position adopted by the actuator while irradiating the area with light, wherein preferably aiming said light source at one of the areas for each second chlorophyll fluorescence measurement comprises moving the actuator to the recorded position of the actuator from the corresponding first chlorophyll fluorescence measurement.

**11.** A method according to any of the preceding claims, wherein recording the location of the area for each first chlorophyll fluorescence measurement comprises saving a captured image of the area, and wherein preferably aiming the light source at one of the areas for each second chlorophyll fluorescence measurement comprises capturing an image of the crop, comparing the captured image of the crop with the saved captured image of the area from the first chlorophyll fluorescence measurement, and adjusting the aim of the light source based on the result of the comparison.

**12.** A method according to any of the preceding claims, wherein the optical sensor comprises an imaging optical sensor, such as a camera, configured to capture an image of each irradiated area of the crop.

**13.** A method according to any of the preceding claims, wherein the optical sensor has a field of view of no more than 400 $\text{deg}^2$, preferably no more than 200 $\text{deg}^2$, more preferably no more than 50 $\text{deg}^2$, most preferably no more than 25 $\text{deg}^2$.

**14.** A method according to any of the preceding claims, wherein the actuator is configured to move the optical sensor and/or to move one or more optical elements, such as mirrors, relative to the optical sensor so as to enable the optical sensor to detect chlorophyll fluorescence from each area irradiated with light, wherein preferably the light source and optical sensor are fixedly mounted relative to one another.

**15.** A method according to any of the preceding claims, wherein the light source comprises a laser, wherein preferably the laser is configured to irradiate a spot-shaped area with light.

START

S110 — Aim the light source and sensor at a new area.

S120 — Irradiate the area with light using the light source.

S130 — Detect fluorescence from the area.

S140 — Record the location of the area.

S150 — Are there any additional areas to measure?

Yes

No

S200 — Wait until start time for second measurements

S210 — Aim the light source and sensor at an area based on the recorded locations.

S220 — Irradiate the area with light using the light source.

S230 — Detect fluorescence from the area.

S250 — Are there any additional areas to measure?

Yes

No

END

FIG. 1

# FIG. 2

FIG. 3

EP 4 368 970 A1

# FIG. 4

# FIG. 5

FIG. 6

FIG. 7

START

S110 — Aim the light source and sensor at a new area.

S120 — Irradiate the area with light using the light source.

S130 — Detect fluorescence from the area.

S140 — Record the location of the area.

S150 — Are there any additional areas to measure?

Yes

No

S110' — Aim the light source and sensor at one of the measured areas based on the recorded locations.

S111' — Adjust the aim of the light source to compensate for plant growth

S120' — Irradiate the area with light using the light source.

S130' — Detect fluorescence from the area.

S140' — Update the recorded location of the area.

S160 — Has each area been measured ten times?

No

Yes

A

# FIG. 8A

S171 — Disregard any measurement based on the number of pixels from which fluorescence is detected being below a threshold.

S172 — Disregard any measurement based on pixel brightness being below a threshold.

S180 — Average the remaining measurements for each area.

S190 — Disregard any average measurement based on the number of measurements used to calculate the average being below a threshold.

# FIG. 8B

B

S200 — Wait until start time for second measurements

S210 — Aim the light source and sensor at an area based on the recorded locations.

S211 — Adjust the aim of the light source to compensate for plant growth

S220 — Irradiate the area with light using the light source.

S230 — Detect fluorescence from the area.

S240 — Are there any additional areas to measure?

END

FIG. 8C

FIG. 9

Europäisches
Patentamt

European
Patent Office

Office européen
des brevets

# EUROPEAN SEARCH REPORT

Application Number

EP 22 20 6257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 516 948 A1 (SONY CORP [JP]) 31 July 2019 (2019-07-31) * abstract; figures 10,19,23 * * paragraphs [0017], [0082] – [0090], [0197] – [0204], [0256] – [0259] * ----- | 1-15 | INV. G01N21/63 G01N21/64 G01N21/84 |
| X | WO 2022/099403 A1 (ECOATION INNOVATIVE SOLUTIONS INC [CA]) 19 May 2022 (2022-05-19) * abstract; figure 1 * * paragraphs [0025] – [0027], [0031], [0045], [0046], [0052], [0053], [0069] * ----- | 1-15 | |

TECHNICAL FIELDS
SEARCHED        (IPC)

G01N

The present search report has been drawn up for all claims

| Place of search | Date of completion of the search | Examiner |
|---|---|---|
| Munich | 31 March 2023 | Passier, Martinus |

EPO FORM 1503 03.82 (P04C01)

## ANNEX TO THE EUROPEAN SEARCH REPORT
## ON EUROPEAN PATENT APPLICATION NO.

EP 22 20 6257

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | Publication date | Patent family member(s) | | Publication date |
|---|---|---|---|---|---|
| EP 3516948 | A1 | 31-07-2019 | CN | 109714949 A | 03-05-2019 |
| | | | EP | 3516948 A1 | 31-07-2019 |
| | | | JP | 7014170 B2 | 01-02-2022 |
| | | | JP | WO2018056102 A1 | 11-07-2019 |
| | | | US | 2019204228 A1 | 04-07-2019 |
| | | | WO | 2018056102 A1 | 29-03-2018 |
| WO 2022099403 | A1 | 19-05-2022 | US | 2022155054 A1 | 19-05-2022 |
| | | | WO | 2022099403 A1 | 19-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. MURCHIE ; T. LAWSON.** Chlorophyll fluorescence analysis: a guide to good practice and understanding some new applications. *Journal of experimental botany,* 2013, vol. 64 (13), 3983-98